# EUROPÄISCHE PATENTSCHRIFT

(11) **EP 3 877 797 B1**
(45) Veröffentlichungstag und Bekanntmachung des Hinweises auf die Patenterteilung: **13.08.2025**
(21) Anmeldenummer: 19813241.7
(22) Anmeldetag: 08.11.2019
(51) Int. Cl.: G02B 21/14, G02B 21/36, G02B 21/12

(54) **MIKROSKOPISCHES DURCHLICHTKONTRASTIERVERFAHREN**
MICROSCOPIC TRANSMITTED LIGHT CONTRASTING METHOD
PROCÉDÉ DE CONTRASTE EN MICROSCOPIE À LUMIÈRE TRANSMISE

(30) Priorität: 09.11.2018 DE 102018128083
(43) Veröffentlichungstag der Anmeldung: 15.09.2021
(73) Patentinhaber: Leica Microsystems CMS GmbH, 35578 Wetzlar (DE)
(72) Erfinder: SCHUMANN, Christian, 35423 Lich (DE)
(74) Vertreter: Schaumburg und Partner Patentanwälte mbB
(86) Internationale Anmeldenummer: PCT/EP2019/080710
(87) Internationale Veröffentlichungsnummer: WO 2020/094851

(56) Entgegenhaltungen:
- DE-A1- 102013 110 497
- US-A1- 2014 354 983
- US-A1- 2017 276 613
- HANGWEN LU ET AL: "Quantitative phase imaging and complex field reconstruction by pupil modulation differential phase contrast", OPTICS EXPRESS, vol. 24, no. 22, 31 October 2016 (2016-10-31), US, pages 25345, XP055444512, ISSN: 2161-2072, DOI: 10.1364/OE.24.025345
- ZACHARY F. PHILLIPS ET AL: "Single-shot quantitative phase microscopy with color-multiplexed differential phase contrast (cDPC)", PLOS ONE, vol. 12, no. 2, 2 February 2017 (2017-02-02), pages e0171228, XP055554064, DOI: 10.1371/journal.pone.0171228

## Beschreibung

Die Erfindung betrifft ein mikroskopisches Durchlichtkontrastierverfahren und eine Einrichtung zur Durchführung eines mikroskopischen Durchlichtkontrastierverfahrens.

Auf dem Gebiet der Lichtmikroskopie sind verschiedene Phasenkontrast-Verfahren bekannt, die darauf abzielen, den Bildkontrast insbesondere bei der Abbildung biologischer Proben zu verbessern. Die bekanntesten solchen Verfahren sind der Phasenkontrast nach Zernike und der differentielle Interferenzkontrast nach Nomarski, welche auch in konventionellen Durchlichtmikroskopen verfügbar sind.

Das klassische Phasenkontrast-Verfahren nach Zernike sieht eine Überdeckung eines beleuchtungsseitigen Lichtrings mit einem Phasenring vor, der sich in der Objektivpupille befindet. Die Notwendigkeit einer solchen Überdeckung ist insbesondere dann von Nachteil, wenn probeninduzierte Pupillenaberrationen auftreten. So ergibt sich beispielsweise in flüssigkeitsgefüllten Probenbehältern kleinen Querschnitts, wie sie etwa die einzelnen Vertiefungen einer Mikrotiterplatte darstellen, infolge der Oberflächenspannung der Flüssigkeit ein deutlich ausgeprägter Flüssigkeitsmeniskus, der zu einem Versatz der Beleuchtungspupille bei Transmission durch die Probe führt. Eine dauerhafte Überdeckung von Licht- und Phasenring ist unter diesen Umständen nicht möglich.

Bei dem differentiellen Interferenzkontrastverfahren nach Nomarski, kurz DIC, wird das Beleuchtungslicht durch ein Wollaston-Prisma in zwei zueinander kohärente, aber in der Probe seitlich zueinander versetzte Teilbündel aufgespalten. Diese beiden Teilbündel werden objektivseitig durch ein weiteres Wollaston-Prisma zur Überlagerung und Interferenz gebracht. Diese polarisationsbedingte Aufspaltung der beiden Teilbündel beim DIC-Verfahren hat zur Folge, dass eine Doppelbrechung, wie sie etwa durch den Boden eines üblichen aus Kunststoff gefertigten Probengefäßes auftritt, infolge der damit einhergehenden Beeinflussung der Polarisation zu einer deutlichen Kontrastverschlechterung führt. Da sich diese unerwünschte Doppelbrechung in der Fertigung herkömmlicher Kunststoff-Probengefäße nicht vermeiden lässt, ist das DIC-Verfahren nach Nomarski z.B. in Kunststoff-Petrischalen oder Kunststoff-Mikrotiterplatten nicht anwendbar.

Ferner existiert ein schnell expandierendes Feld von computerimplementierten Durchlichtkontrastierverfahren, zum Beispiel ein als differentieller Phasenkontrast bezeichnetes Verfahren, beschrieben in L. Tian & L. Waller, Opt. Exp. 23 (2015), 11394*,* ein als Transport-of-Intensity-Imaging bezeichnetes Verfahren, beschrieben in M. Teague, J. Opt. Soc. Am. 73 (1983), 1434*,* und ein als Pupillenmodulations-Kontrast bezeichnetes Verfahren, beschrieben in H. Lu et al., Opt. Exp. 24 (2016), 23545*.* Diese Verfahren basieren darauf, dass durch Kenntnis der optischen Übertragungsfunktion, siehe beispielsweise Born & Wolf, Principles Of Optics, 7th ed. ISBN 978-0-521-6422-4, 10.6.3*. Imaging with partially coherent quasi-monochromatic illumination,* bzw. deren linearer Näherung, die auch als Weak Object Transfer Function bekannt ist und beispielsweise in N. Streibl, J. Opt. Soc. Am. A 2 (1985), 121 beschrieben ist, eine quantitative Rekonstruktion von Phasen- und Absorptionsinformation einer Probe möglich ist. Dies kann sowohl in zwei als auch in drei Dimensionen erfolgen. Nachteilhaft bei diesen Verfahren ist, dass dieses ein bestimmtes Verhältnis von Beleuchtungsapertur zur Detektionsapertur benötigen. So muss bei differentiellem Phasenkontrast die Beleuchtungsapertur größer als oder gleich groß wie die Detektionsapertur sein. Bei Pupillenmodulations-Kontrast muss die die Beleuchtungsapertur kleiner als oder gleich groß wie die Detektionsapertur sein.

Die vorgenannten computerimplementierten Durchlichtkontrastierverfahren weisen jedoch einige Nachteile auf. So benötigt der differentielle Phasenkontrast eine vollständige Ausleuchtung der Objektivpupille durch das Durchlichtbeleuchtungssystem, wenn es nicht zu geringen bis verschwindenden Beträgen der Phasentransferfunktion bei niedrigen Ortsfrequenzen kommen soll. Somit ist dieses Verfahren nicht mit vertretbarem Aufwand universell anwendbar in einem zusammengesetzten Mikroskop, insbesondere bei der Verwendung von hochaperturigen Immersionsobjektiven, da hier eine vollständige Ausleuchtung der Objektivpupille mit hohem Aufwand verbunden ist. Für Transport-of-Intensity-Imaging ist die Aufnahme von Bildern bei unterschiedlichen Defoki der Probe vonnöten. Unabhängig davon, ob diese Defoki nun durch einen klassischen Fokussiertrieb, d.h. durch eine Bewegung eines Objekttisches oder Objektivrevolvers, eine fokussierbare Linse, zum Beispiel eine Linse auf Flüssigkeitsbasis, Wellenfrontmanipulatoren, beispielsweise räumliche Lichtmodulatoren - auch Spatial Light Modulator (SLM) genannt - oder deformierbare Spiegel, realisiert werden, müssen mehrere Bilder zeitlich aufeinanderfolgend aufgenommen werden. Hierdurch wird die Bildaufnahmerate verringert, und es werden bei einer dynamischen Probe evtl. Bildartefakte generiert. Eine Realisierung mit mehreren verschieden fokussierten Kameras ist zwar denkbar, aber aufwändig und könnte nicht den vollen Vergrößerungsbereich des zusammengesetzten Mikroskops ausnutzen. Pupillenmodulationskontrast benötigt eine kohärente Lichtquelle, welche kostenaufwändig ist und zusätzliche Sicherheitsmaßnahmen zur Gewährleistung der Lasersicherheit erfordert. Weiterhin wird durch eine kohärente Beleuchtung die erzielbare Auflösung verringert.

Zum Stand der Technik wird auch auf Z. Phillips et al., PLoS ONE 12 (2017), e0171228*;* W. Lee et al., Opt. Exp. 25 (2017), 8398 verwiesen, worin ein Verfahren zum differentiellen Phasenkontrast offenbart ist, bei dem Bilder zeitgleich aufgenommen werden. Dies wird durch eine spektrale Codierung einer Beleuchtungspupille erreicht. Das Verfahren weist jedoch ebenfalls die im Zusammenhang mit differentiellem Phasenkontrast erwähnten Nachteile auf.

Ferner wird zum Stand der Technik auf die Dokumente DE 10 2013 110497 A1, US 2014/354983 A1 und US 2017/276613 A1 sowie die Dokumente Hangwen Lu et al, "Quantitative phase imaging and complex field reconstruction by pupil modulation differential phase contrast", OPTICS EXPRESS, US, (20161031), vol. 24, no. 22, page 25345 und Zachary F. Phillips et al, "Single-shot quantitative phase microscopy with colormultiplexed differential phase contrast (cDPC)", PLOS ONE, (20170202), vol. 12, no. 2, page e0171228 verwiesen.

Aufgabe der vorliegenden Erfindung ist es, ein mikroskopisches Durchlichtkontrastierverfahren anzugeben, das über den zugänglichen Vergrößerungs- und Aperturbereich eines zusammengesetzten Mikroskops einsetzbar ist. Ferner ist Aufgabe der Erfindung, eine Einrichtung anzugeben, mit der ein entsprechendes mikroskopisches Durchlichtkontrastierverfahren durchführbar ist.

Diese Aufgabe wird durch ein Verfahren mit den Merkmalen des Anspruchs 1 und durch eine Einrichtung mit den Merkmalen des Anspruchs 12 gelöst. Vorteilhafte Weiterbildungen sind in den Unteransprüchen angegeben.

Bei dem erfindungsgemäßen mikroskopischen Durchlichtkontrastierverfahren wird eine Probe zumindest teilweise durch eine asymmetrische erste Beleuchtungspupille beleuchtet und die Probe wird zumindest teilweise durch eine asymmetrische erste Detektionspupille abgebildet, um ein erstes Teilbild zu erzeugen, wobei die erste Beleuchtungspupille und die erste Detektionspupille in Projektion auf eine senkrecht zu einer optischen Achse liegende Ebene derart gegeneinander verdreht und einander teilweise überlappend zueinander angeordnet sind, dass zumindest ein erster Bereich des Winkelraums in einem Hellfeld und ein von dem ersten Bereich verschiedener zweiter Bereich des Winkelraums in einem Dunkelfeld liegt. Ferner wird die Probe zumindest teilweise durch eine asymmetrische zweite Beleuchtungspupille beleuchtet, und die Probe wird zumindest teilweise durch eine asymmetrische zweite Detektionspupille abgebildet, um ein zweites Teilbild zu erzeugen, wobei die zweite Beleuchtungspupille und die zweite Detektionspupille in Projektion auf die senkrecht zu der optischen Achse liegende Ebene derart gegeneinander verdreht und einander teilweise überlappend zueinander angeordnet sind, dass zumindest ein dritter Bereich des Winkelraums in einem Hellfeld und ein von dem dritten Bereich verschiedener vierter Bereich des Winkelraums in einem Dunkelfeld liegt. Aus dem ersten Teilbild und dem zweiten Teilbild wird ein Bild der Probe erzeugt, indem eine komplexe Transmissionsfunktion der Probe aus dem ersten Teilbild und dem zweiten Teilbild rekonstruiert wird.

Unter Winkelraum wird in der vorliegenden Anmeldung der Raum des Ortsfrequenzspektrums, das insbesondere in der Optik ebener Wellen auch als Winkelspektrum bezeichnet wird, der beiden Teilbilder verstanden. Somit stellt der Winkelraum den Raum der Fourier-Transformierten der beiden Teilbilder dar.

In der vorliegenden Anmeldung bezieht sich der Begriff "asymmetrisch" auf die optische Achse eines Objektivs, das den beiden Detektionspupillen zugeordnet ist, d.h. die als asymmetrisch bezeichneten Pupillen sind nicht, wie in der Durchlichtmikroskopie sonst üblich, rotationssymmetrisch in Bezug auf die optische Achse des den beiden Detektionspupillen zugeordneten Objektivs. Beispielsweise haben die beiden Beleuchtungspupillen und die beiden Detektionspupillen jeweils die Form eines Kreissektors, eines Kreissegmentes oder eines Kreisbogens. Die jeweilige Verdrehung der beiden Beleuchtungspupillen und der beiden Detektionspupillen gegeneinander wird im Folgenden auch als polare Verdrehung bezeichnet. Hierbei nimmt der Begriff "polar" Bezug auf ein Polarkoordinatensystem, dessen Polrichtung durch die optische Achse des Objektivs definiert ist.

Von dem Objektiv aus gesehen, überlappen sich zum einem die erste Beleuchtungspupille und die erste Detektionspupille und zum anderen die zweite Beleuchtungspupille und die zweite Detektionspupille jeweils teilweise. Hierdurch wird erreicht, dass das erste bzw. das zweite Teilbild jeweils einen Hellfeldanteil, d.h. einen hellen Hintergrund, und einen Dunkelfeldanteil, d.h. einen dunklen Hintergrund, aufweisen. Die Beleuchtungspupillen realisieren somit eine asymmetrische Ausleuchtung der Probe.

Der Hellfeldanteil des ersten bzw. zweiten Teilbildes bildet kontrastreiche und farbige Details der Probe - sogenannte Amplitudenobjekte oder -strukturen - ab. In dem Dunkelfeldanteil werden hingegen jeweils transparente oder nahezu transparente Details der Probe - sogenannte Phasenobjekte oder -strukturen - abgebildet, die lediglich die Phase der durch sie passierender Lichtstrahlen ändern. Entsprechend stellt der Dunkelfeldanteil die Phasensensitivität des Verfahrens sicher. Durch eine Kombination von Hellfeldanteil und Dunkelfeldanteil des ersten und zweiten Teilbildes können sowohl Phaseninformation als auch Amplitudeninformation der Probe in dem aus den Teilbildern erzeugten Bild dargestellt werden. Durch die Kombination von Phaseninformation und Amplitudeninformation kann ein kontrastreiches Bild der Probe erzeugt werden. Da das Bild der Probe gleichsam aus mehreren Teilbildern zusammengesetzt wird und somit keine Ausleuchtung einer gesamten Objektivpupille benötigt, kann das erfindungsgemäße Verfahren sowohl mit hochaperturigen Objektiven als auch mit niederaperturigen Objektiven eingesetzt werden. Insbesondere ist es in dem erfindungsgemäßen Verfahren egal, ob die Beleuchtungsapertur größer oder kleiner als die Apertur des Objektivs ist. Dies ist insbesondere in zusammengesetzten Mikroskopen mit auswechselbaren Objektiven von Vorteil. Ferner kann das erfindungsgemäße Verfahren mit nur einem einzigen Sensorelement realisiert werden, so dass der volle Vergrößerungsbereich des zusammengesetzten Mikroskops ausgenutzt werden kann.

Es versteht sich von selbst, dass bei dem erfindungsgemäßen Verfahren auch mehr als zwei Teilbilder erzeugt werden können, aus denen das Bild der Probe erzeugt wird. Jedem weiteren Teilbild sind dabei eine weitere asymmetrische Beleuchtungspupille und eine weitere asymmetrische Detektionspupille zugeordnet, die derart zueinander angeordnet sind, dass zumindest ein Bereich des Winkelraums in einem Hellfeld und ein von diesem Bereich verschiedener weiterer Bereich des Winkelraums in einem Dunkelfeld liegt.

In einer vorteilhaften Weiterbildung wird die Probe zumindest teilweise mit erstem Beleuchtungslicht durch die erste Beleuchtungspupille beleuchtet, die Probe zumindest teilweise mit zweitem Beleuchtungslicht durch die zweite Beleuchtungspupille beleuchtet, wobei das erste Beleuchtungslicht und das zweite Beleuchtungslicht eine unterschiedliche spektrale Zusammensetzung aufweisen. Vorzugsweise werden das erste Teilbild und das zweite Teilbild gleichzeitig aufgenommen. Dies verhindert insbesondere bei der Aufnahme dynamischer Prozesse in der Probe das Entstehen von Bildartefakten durch eine zeitversetzte Aufnahme des ersten Teilbildes und des zweiten Teilbildes. In diesem Zusammenhang spricht man auch von einer spektralen Codierung der jeweiligen Beleuchtungspupille. Diese erlaubt es, die durch die beiden Beleuchtungspupillen Bereiche des Winkelraums in den zwei Teilbildern voneinander zu trennen. Diese Trennung kann beispielsweise durch eine Bayer-Matrix vor einer CCD- oder CMOS-Kamera realisiert werden, oder durch eine spektral teilende Prismenanordnung vor einer Mehrzahl von monochromen CCD- oder CMOS-Kameras, oder aber auch durch Nutzung von dichroitischen Strahlteilerplättchen.

In einer weiteren vorteilhaften Weiterbildung wird für das erste Teilbild und/oder das zweite Teilbild eine Anpassung des Samplings, d.h. der Abtastrate, eine Rauschreduktion oder eine spektrale Umverteilung durchgeführt. Bevor eine Weiterverarbeitung zur Erzeugung des Bildes der Probe stattfindet, können verschiedene Bildverarbeitungsoperationen auf das erste Teilbild und/oder das zweite Teilbild angewendet werden, um die Bildqualität der beiden Teilbilder und des daraus erzeugten Bildes der Probe zu verbessern.

Vorzugsweise wird das Bild der Probe erzeugt, indem eine komplexe Transmissionsfunktion der Probe numerisch aus dem ersten Teilbild und dem zweiten Teilbild rekonstruiert wird. Die komplexe Transmissionsfunktion der Probe, die auch als komplexe Streufunktion bezeichnet wird, umfasst Phasen- und Amplitudeninformation der Probe. Sie kann unter Zuhilfenahme der Phasen- und Amplitudentransferfunktionen der zur Abbildung verwendeten Einrichtung mit im Stand der Technik bekannten Methoden numerisch berechnet werden, beispielweise mithilfe eines Wiener-Filters oder mithilfe iterative Methoden, wie sie beispielsweise in M. Chen et al., Biomed. Opt. Exp. 7 (2016), 3940 beschrieben sind.

In einer vorteilhaften Weiterbildung werden die Schritte zur Erzeugung des Bildes für verschiedene Schichten der Probe wiederholt, und es wird aus den derart erzeugten Bildern ein Bildstapel erzeugt.

In einer weiteren vorteilhaften Weiterbildung wird ein Ausleuchtungsprofil der ersten Beleuchtungspupille und/oder ein Ausleuchtungsprofil der zweiten Beleuchtungspupille erfasst. Dies erlaubt eine adaptive Anpassung der asymmetrischen Ausleuchtung, insbesondere des Winkelspektrums, durch Vergleichen eines Soll-Wertes des Ausleuchtungsprofils mit dem erfassten Ist-Wert des Ausleuchtungsprofils und durch Anpassen der ersten Beleuchtungspupille und/oder der zweiten Beleuchtungspupille.

In einer vorteilhaften Weiterbildung wird ein Bild der ersten Beleuchtungspupille und/oder der zweiten Beleuchtungspupille nach Transmission durch die Probe erzeugt, und es werden mithilfe dieses Bildes Phasen- und Amplitudentransferfunktionen dynamisch berechnet. Die dynamisch erzeugten Phasen- und Amplitudentransferfunktionen - auch optische Übertragungsfunktionen genannt - können insbesondere als Grundlage für die Rekonstruktion der komplexen Transmissionsfunktion der Probe dienen. Die Verwendung der dynamisch erzeugten Phasen- und Amplitudentransferfunktionen hat gegenüber der Verwendung von vorbestimmten Phasen- und Amplitudentransferfunktionen den Vorteil, dass die Rekonstruktion unabhängig von kurzfristigen Veränderungen in dem zur Abbildung verwendeten optischen System ist. Die Erzeugung einer dynamischen Transferfunktion kann auch die Extrapolation bzw. Modellierung des Beleuchtungsspektrums im Dunkelfeld beinhalten, da dieses nicht zur Messung des Beleuchtungsspektrums beispielsweise durch ein Betrandlinsensystem abgebildet werden kann.

In einer weiteren vorteilhaften Weiterbildung werden die erste Beleuchtungspupille, die zweite Beleuchtungspupille, die erste Detektionspupille und/oder die zweite Detektionspupille abgeschattet.

Vorzugsweise werden die Schritte zur Erzeugung des Bildes für verschiedene Abschattungen der ersten Beleuchtungspupille, der zweiten Beleuchtungspupille, der ersten Detektionspupille und/oder der zweiten Detektionspupille wiederholt. Durch eine solche sequentielle Aufnahme wird das Übersprechen farbcodierter Kanäle verringert und das Signal-Rausch-Verhältnis verbessert, das einen entscheidenden Einfluss auf die Qualität des erzeugten Bilds der Probe hat.

Vorzugsweise haben die erste Beleuchtungspupille, die zweite Beleuchtungspupille, die erste Detektionspupille und/oder die zweite Detektionspupille jeweils die Form eines Kreissektors oder eines Kreissegmentes.

Es ist vorteilhaft, wenn die erste Beleuchtungspupille und die zweite Beleuchtungspupille derart zueinander angeordnet sind, dass sie durch eine Drehung in Überlapp gebracht werden können, und/oder die erste Detektionspupille und die zweite Detektionspupille derart zueinander angeordnet sind, dass sie durch eine Drehung in Überlapp gebracht werden können. Das erste Teilbild und das zweite Teilbild haben hierdurch eine einfache geometrische Beziehung zueinander, wodurch es besonders einfach ist, aus dem erstem Teilbild und dem zweiten Teilbild das Bild der Probe zu erzeugen.

Die Erfindung betrifft ferner eine Einrichtung zur Durchführung eines mikroskopischen Durchlichtkontrastierverfahrens. Die Einrichtung umfasst eine Beleuchtungseinheit, die ausgebildet, eine Probe zumindest teilweise durch eine asymmetrische erste Beleuchtungspupille zu beleuchten und die Probe zumindest teilweise durch eine asymmetrische zweite Beleuchtungspupille zu beleuchten, eine Detektionseinheit, die ausgebildet, die Probe zumindest teilweise durch eine asymmetrische erste Detektionspupille abzubilden, um ein erstes Teilbild zu erzeugen, und die Probe zumindest teilweise durch eine asymmetrische zweite Detektionspupille abzubilden, um ein zweites Teilbild zu erzeugen, wobei die erste Beleuchtungspupille und die erste Detektionspupille in Projektion auf eine senkrecht zu einer optischen Achse liegende Ebene derart gegeneinander verdreht und einander teilweise überlappend zueinander angeordnet sind, dass zumindest ein erster Bereich des Winkelraums in einem Hellfeld und ein von dem ersten Bereich verschiedener zweiter Bereich des Winkelraums in einem Dunkelfeld liegt und das erste Teilbild einen ersten Hellfeldanteil und einen ersten Dunkelfeldanteil aufweist, und wobei die zweite Beleuchtungspupille und die zweite Detektionspupille in Projektion auf die senkrecht zu der optischen Achse liegende Ebene derart gegeneinander verdreht und einander teilweise überlappend zueinander angeordnet sind, dass zumindest ein dritter Bereich des Winkelraums in einem Hellfeld und ein von dem dritten Bereich verschiedener vierter Bereich des Winkelraums in einem Dunkelfeld liegt und das zweite Teilbild einen zweiten Hellfeldanteil und einen zweiten Dunkelfeldanteil aufweist, und eine Steuereinheit, die ausgebildet ist, aus dem ersten Teilbild und dem zweiten Teilbild ein Bild der Probe zu erzeugen, indem eine komplexe Transmissionsfunktion der Probe aus dem ersten Teilbild und dem zweiten Teilbild rekonstruiert wird.

Vorzugsweise umfasst die Beleuchtungseinheit ein erstes Modulatorelement zum Erzeugen der ersten Beleuchtungspupille und der zweiten Beleuchtungspupille, und die Detektionseinheit ein zweites Modulatorelement zum Erzeugen der ersten Detektionspupille und der zweiten Detektionspupille. Das erste und das zweite Modulatorelement erzeugen die erste und zweite Beleuchtungspupille bzw. die erste und die zweite Detektionspupille physisch nach Art einer Blende. Bei dem ersten Modulatorelement und/oder dem zweiten Modulatorelement kann es sich um verschiedene Blenden, ein System auswechselbarer Blenden, eine Mikrospiegel-Anordnung, oder räumliche Lichtmodulatoren - kurz SLM - handeln. Alternativ können die erste Beleuchtungspupille und die zweite Beleuchtungspupille auch durch LED-Arrays erzeugt werden.

In einer vorteilhaften Weiterbildung umfasst die Einrichtung ein Bertrandlinsensystem zur Detektion des Ausleuchtungsprofils der ersten Detektionspupille und/oder des Ausleuchtungsprofils der zweiten Detektionspupille. Das Bertrandlinsensystem erlaubt eine konoskopische Beobachtung der ersten Detektionspupille und/oder der zweiten Detektionspupille. Hierdurch ist eine adaptive Anpassung der asymmetrischen Ausleuchtung durch eine Anpassung der ersten Beleuchtungspupille und/oder der zweiten Beleuchtungspupille, beispielsweise durch Steuerung des ersten Modulatorelements, ermöglicht.

Vorzugsweise umfasst die Beleuchtungseinheit eine inkohärente Lichtquelle. Inkohärente Lichtquellen sind kostengünstiger als kohärente Lichtquellen, d.h. Laserlichtquellen. Ferner entfallen aufwendige Maßnahmen zur Gewährleistung der Lasersicherheit.

Die Erfindung betrifft ferner ein Mikroskop, insbesondere ein Durchlichtmikroskop, mit einer Einrichtung nach vorbeschriebener Art. Das Mikroskop kann sowohl als aufrechtes Mikroskop als auch als inverses Mikroskop ausgebildet sein.

Die Erfindung wird im Folgenden anhand der Figuren erläutert. Darin zeigen:
- Figur 1: eine schematische Darstellung eines Durchlichtmikroskops als erstes Ausführungsbeispiel;
- Figur 2: eine schematische Darstellung der Lage einer ersten Beleuchtungspupille und einer ersten Detektionspupille relativ zueinander in dem Durchlichtmikroskops nach Figur 1;
- Figur 3: eine Amplitudentransferfunktion des Durchlichtmikroskops nach Figur 1;
- Figur 4: eine Phasentransferfunktion des Durchlichtmikroskops nach Figur 1;
- Figur 5: eine Phasentransferfunktion eines aus Teilbildern zusammengesetzten Bildes;
- Figur 6: zeigt drei Teilbilder der Probe, die mit Hilfe des Durchlichtmikroskops nach Figur 1 aufgenommen wurden;
- Figur 7: die mit Hilfe eines Wiener-Filters aus den drei Teilbildern rekonstruierten Amplitudenstrukturen und Phasenstrukturen der Probe;
- Figur 8: eine schematische Darstellung eines Durchlichtmikroskops als zweites Ausführungsbeispiel;
- Figur 9: eine schematische Darstellung eines Durchlichtmikroskops mit einem Bertrandlinsensystem als drittes Ausführungsbeispiel; und
- Figur 10: ein Flussdiagramm, das eine spezielle Ausführungsform des erfindungsgemäßen mikroskopisches Durchlichtkontrastierverfahren zeigt.

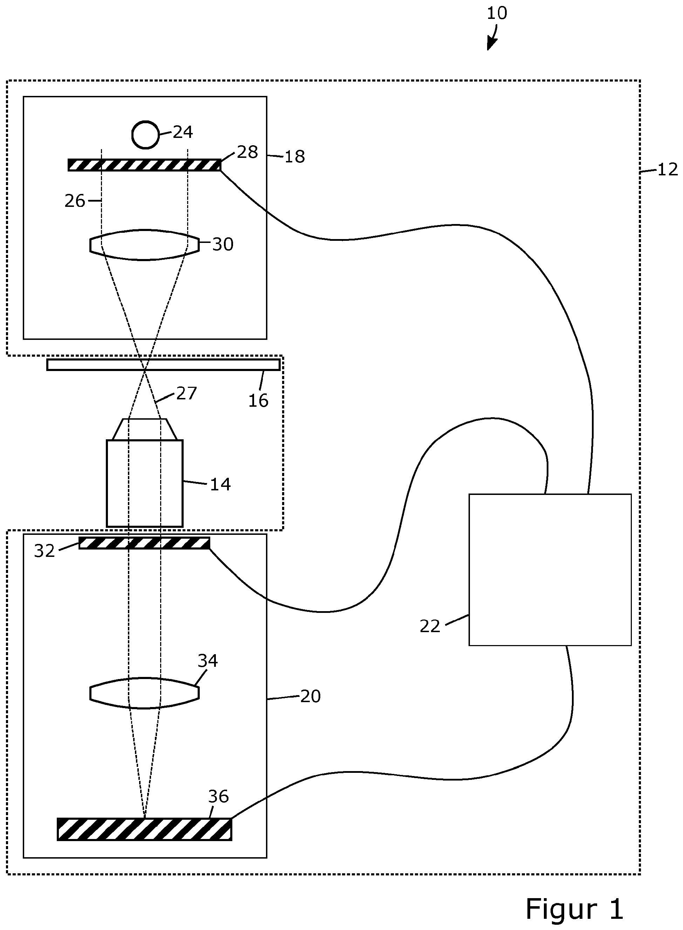

Figur 1 zeigt eine schematische Darstellung eines Durchlichtmikroskops 10 als erstes Ausführungsbeispiel. Das Durchlichtmikroskop 10 umfasst eine Einrichtung 12 zur Durchführung eines mikroskopischen Durchlichtkontrastierverfahrens und ein Objektiv 14, das auf eine Probe 16 gerichtet ist. Die Einrichtung 12 umfasst eine Beleuchtungseinheit 18 zur Beleuchtung der Probe 16, eine Detektionseinheit 20 und eine Steuereinheit 22.

Die Beleuchtungseinheit 18 umfasst eine Lichtquelle 24 zur Erzeugung von inkohärentem Beleuchtungslicht 26, ein erstes Modulatorelement 28, das in einer Pupillenebene der Beleuchtungseinrichtung 18 angeordnet ist und beispielsweise durch ein System auswechselbarer Blenden, eine Mikrospiegel-Anordnung oder einen räumlichen Lichtmodulator gebildet ist, sowie einen Kondensor 30. Das durch die Lichtquelle 24 erzeugte Beleuchtungslicht 26 fällt nach Durchtritt durch das erste Modulatorelement 28 auf den Kondensor 30, der das Beleuchtungslicht 26 auf die Probe 16 lenkt.

Die Probe 16 streut und/oder schwächt das Beleuchtungslicht 26 ab, wodurch aus dem Beleuchtungslicht 26 Detektionslicht 27 entsteht, das zur Abbildung der Probe 16 verwendet wird. Das von der Probe 16 ausgehende Detektionslicht 27 wird durch das Objektiv 14 in die Detektionseinheit 20 gelenkt.

Die Detektionseinheit 20 umfasst ein zweites Modulatorelement 32, das in einer Pupillenebene des Objektivs 14 angeordnet ist und beispielsweise durch ein System auswechselbarer Blenden, eine Mikrospiegel-Anordnung, oder einen räumlichen Lichtmodulator gebildet ist. Falls das Objektiv 14 keine Pupillenebene aufweist, die außerhalb des Objektivs 14 liegt, kann innerhalb des Objektivs 14 liegende Pupillenebene durch ein passendes Relay-System reell nach außerhalb des Objektivs 14 abgebildet werden und das zweite Modulatorelement 32 in dieser reellen Zwischenpupillenebene positioniert werden. Die Detektionseinheit 20 umfasst ferner eine Tubuslinse 34 und ein ortsaufgelöstes Detektorelement 36, beispielsweise ein CDD- oder CMOS-Element.

Das von der Probe 16 ausgehende Detektionslicht 27 wird durch das Objektiv 14 zunächst auf das zweite Modulatorelement 32 gelenkt. Nach Durchtritt durch das zweite Modulatorelement 32 fällt das Detektionslicht 27 durch die Tubuslinse 34 auf das Detektorelement 36. Für den Fall einer einstufigen Abbildung mit einem für endliche Tubuslänge korrigierten Objektiv 14 kann die Tubulslinse auch entfallen.

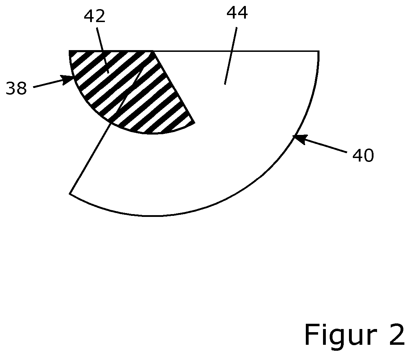

Die Steuereinheit 22 steuert das erste Modulatorelement 28 zur Erzeugung einer ersten Beleuchtungspupille 38, die in Figur 2 genauer dargestellt ist, und einer zweiten Beleuchtungspupille. Hierdurch wird durch die Steuereinheit 22 dynamisch gesteuert, welche Bereiche des Winkelraums durch das Beleuchtungslicht 26 beleuchtet werden. Die Steuereinheit 22 steuert außerdem das zweite Modulatorelement 32 zur Erzeugung einer ersten Detektionspupille 40, die in Figur 2 genauer dargestellt ist, und einer zweiten Detektionspupille gesteuert. Hierdurch wird durch die Steuereinheit 22 dynamisch gesteuert, welche Bereiche des Winkelraums durch die Detektionseinheit 20 abgebildet werden. Ferner steuert die Steuereinheit 22 das Detektorelement 36 derart, dass ein erstes Teilbild, das der ersten Beleuchtungspupille 38 und der ersten Detektionspupille 40 zugeordnet ist, und ein zweites Teilbild, das der zweiten Beleuchtungspupille und der zweiten Detektionspupille zugeordnet ist, erzeugt werden und dass aus dem ersten Teilbild und dem zweiten Teilbild ein Bild der Probe 16 erzeugt wird.

In dem ersten Ausführungsbeispiel werden nur zwei Teilbilder zur Erzeugung des Bildes der Probe 16 aufgenommen. Es können aber auch mehr als zwei Teilbilder aufgenommen werden. Die Steuereinheit 22 steuert dazu das erste Modulatorelement 28 zur Erzeugung weiterer Beleuchtungspupillen und das zweite Modulatorelement 32 zur Erzeugung weiterer Detektionspupillen. Ferner steuert die Steuereinheit 22 das Detektorelement 36 derart, dass weitere Teilbilder erzeugt werden, die jeweils einer weiteren Beleuchtungspupille und einer weiteren Detektionspupille zugeordnet sind, und dass aus dem ersten Teilbild, dem zweiten Teilbild und den weiteren Teilbildern das Bild der Probe 16 erzeugt wird.

Figur 2 zeigt eine schematische Darstellung der Lage der ersten Beleuchtungspupille 38 und der ersten Detektionspupille 40 relativ zueinander in dem Durchlichtmikroskops nach Figur 1. Die Darstellung in Figur 2 zeigt die Pupillen 38, 40 von dem Objektiv 14 her gesehen.

Die erste Beleuchtungspupille 38 und die erste Detektionspupille 40 sind derart angeordnet, dass sie sich teilweise überlappen. Hierdurch entstehen ein erster Beleuchtungsbereich 42, der eine Dunkelfeldbeleuchtung realisiert, und ein zweiter Beleuchtungsbereich 44, der eine Hellfeldbeleuchtung realisiert. Das durch die erste Detektionspupille 40 abgebildete erste Teilbild weist somit einen Hellfeldanteil und einen Dunkelfeldanteil auf.

In dem in Figur 2 gezeigten Ausführungsbeispiel ist die Apertur der ersten Detektionspupille 40 doppelt so groß wie die Apertur der ersten Beleuchtungspupille 38. In einem alternativen Ausführungsbeispiel kann die Apertur der ersten Detektionspupille 40 auch kleiner sein als die Apertur der ersten Beleuchtungspupille 38. Die erste Beleuchtungspupille 38 und die erste Detektionspupille 40 haben jeweils die Form eines Kreissektors, wobei der Mittelpunktswinkel den Wert 120° hat. Durch eine Drehung um 120° lassen sich somit auf einfache Weise aus der ersten Beleuchtungspupille 38 und der ersten Detektionspupille 40 die zweite Beleuchtungspupille und die zweite Detektionspupille erzeugen. In dem in Figur 2 gezeigten Ausführungsbeispiel sind die erste Beleuchtungspupille 38 und die erste Detektionspupille 40 gegeneinander um einen Winkel von 60° polar verdreht.

Soll mit dem anhand von Figur 1 und 2 gezeigten Durchlichtmikroskop 10 der gesamte Winkelraum abgebildet werden, , so muss ein drittes Teilbild erzeugt werden, das einer dritten Beleuchtungspupille und einer dritten Detektionspupille zugeordnet ist, die jeweils durch eine Drehung um 240° aus der ersten Beleuchtungspupille 38 bzw. der ersten Detektionspupille 40 erzeugt werden.

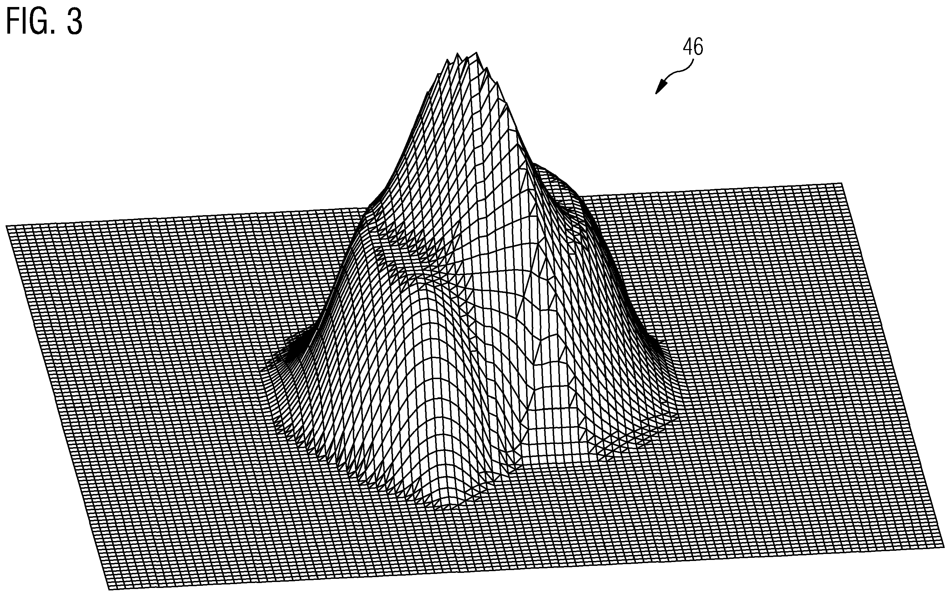

Figur 3 zeigt eine Amplitudentransferfunktion 46 des Durchlichtmikroskops 10 nach Figur 1 für ein Teilbild. Die Amplitudentransferfunktion 46 ist eine Funktion im Winkelraum und gibt an, wie die Beträge räumlicher Frequenzen durch das Durchlichtmikroskop 10 übertragen werden.

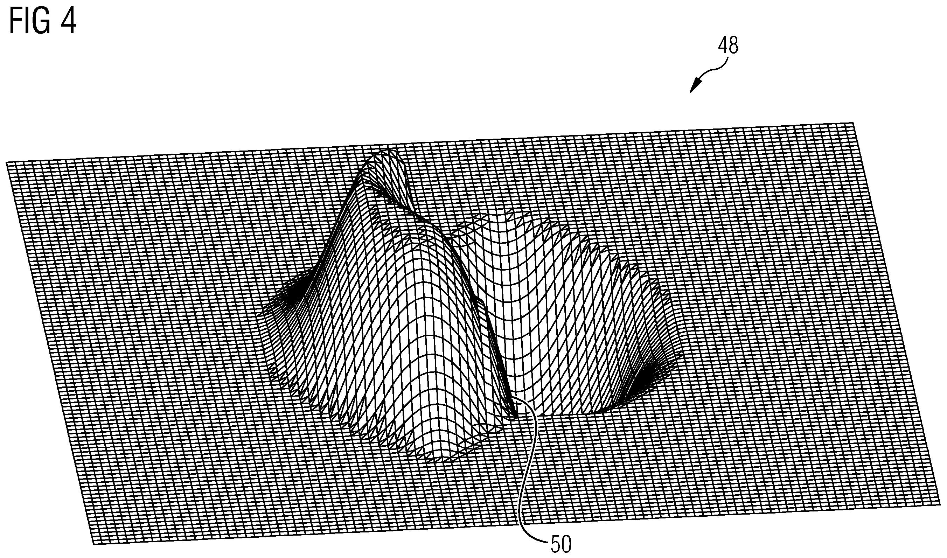

Figur 4 zeigt eine Phasentransferfunktion 48 des Durchlichtmikroskops 10 nach Figur 1 für ein Teilbild. Die Phasentransferfunktion 48 ist wie die Amplitudentransferfunktion 46 eine Funktion im Winkelraum und gibt an, wie die Phasen räumlicher Frequenzen durch das Durchlichtmikroskop 10 übertragen werden. Sie weist einen für eine asymmetrische Ausleuchtung typischen Nulldurchgang 50 auf.

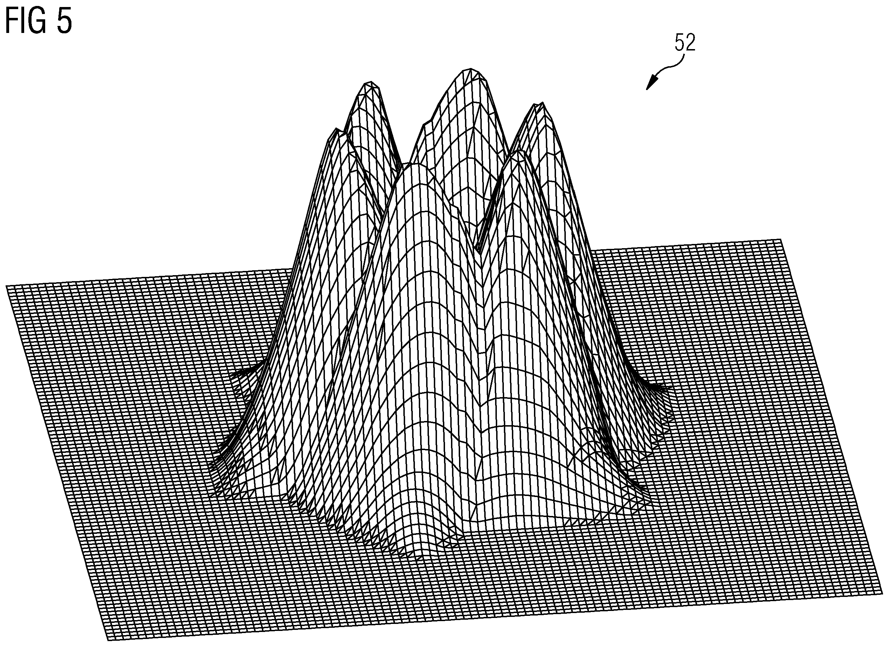

Figur 5 zeigt eine Phasentransferfunktion 52 des aus den Teilbildern erzeugten Bildes der Probe 16. Der Figur 5 kann man entnehmen, dass durch das Kombinieren mehrerer Teilbilder der Probe 16 der Bereich der durch das Durchlichtmikroskop 10 abgebildeten räumlichen Frequenzen vergrößert wird und die Nulldurchgänge 50 der Phasentransferfunktionen der Teilbilder bis auf den Ursprung des Winkelraums entfernt werden, was zu einer Verbesserung des Kontrasts des Bildes der Probe 16 führt.

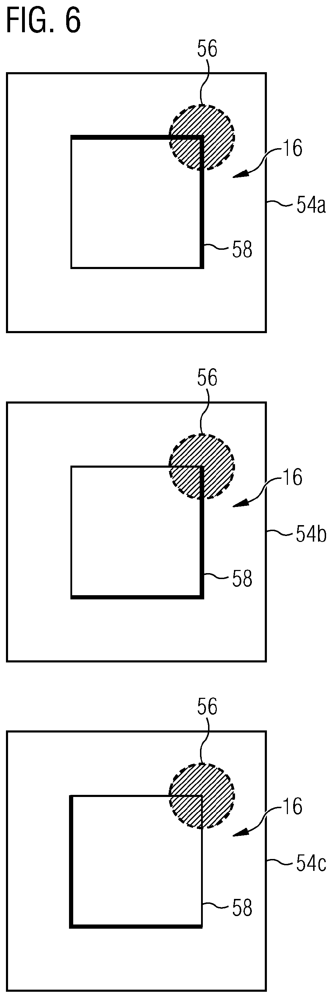

Figur 6 zeigt drei durch eine optische Simulation erzeugte Teilbilder 54a, 54b, 54c, die mit Hilfe des Durchlichtmikroskops 10 nach Figur 1 aufgenommen wurden.

Ein erstes Teilbild 54a der drei Teilbilder 54a, 54b, 54c wurde durch die in Figur 2 dargestellte erste Beleuchtungspupille 38 beleuchtet und durch die ebenfalls in Figur 2 dargestellte erste Detektionspupille 40 abgebildet. Ein zweites Teilbild 54b der drei Teilbilder 54a, 54b, 54c wurde durch die zweite Beleuchtungspupille, die durch Drehung der ersten Beleuchtungspupille 38 um 120° um die optische Achse des Objektivs 14 erzeugt wurde, beleuchtet und durch die zweite Detektionspupille, die durch Drehung der ersten Detektionspupille 40 um 120° um die optische Achse des Objektivs 14 erzeugt wurde, abgebildet. Ein drittes Teilbild 54c der drei Teilbilder 54a, 54b, 54c wurde durch die dritte Beleuchtungspupille, die durch Drehung der ersten Beleuchtungspupille 38 um 240° um die optische Achse des Objektivs 14 erzeugt wurde, beleuchtet und durch die dritte Detektionspupille, die durch Drehung der ersten Detektionspupille 40 um 240° um die optische Achse des Objektivs 14 erzeugt wurde, abgebildet.

Jedes der drei Teilbilder 54a, 54b, 54c zeigt die Probe 16, die sowohl eine Amplitudenstruktur 56 als auch eine transparente Phasenstruktur 58 aufweist.

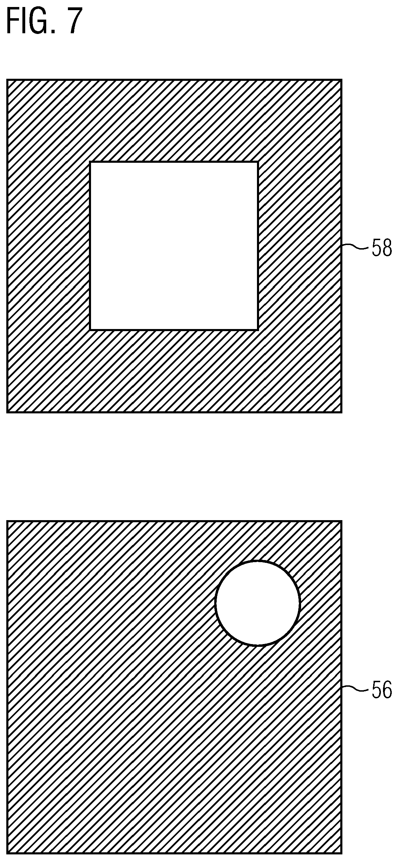

Figur 7 zeigt die mit Hilfe eines Wiener-Filters aus den drei Teilbildern 54a, 54b, 54c rekonstruierten Amplitudenstrukturen 56 und Phasenstrukturen 58 der Probe 16.

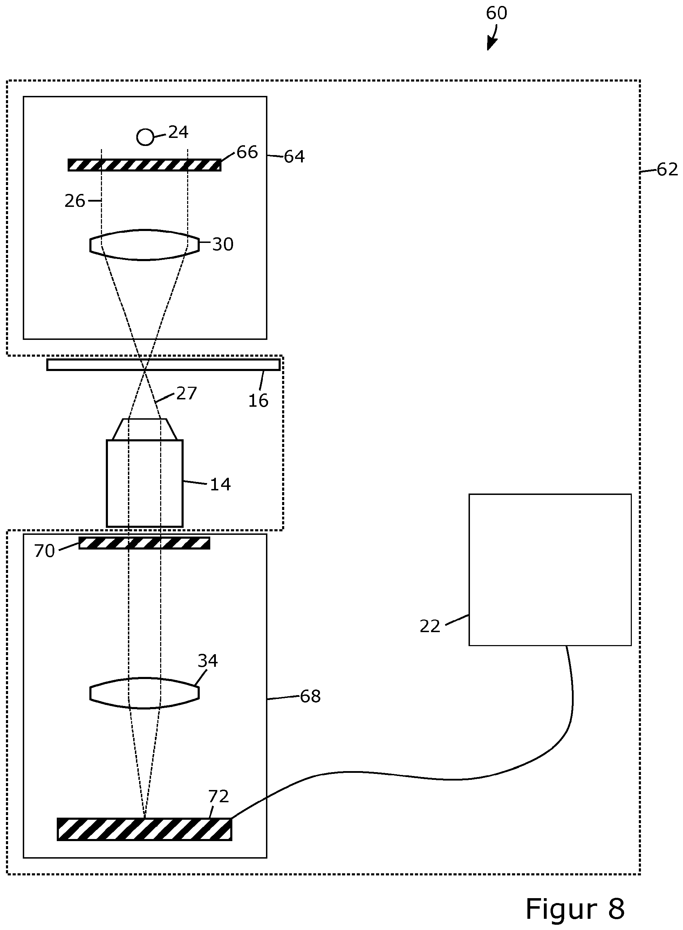

Figur 8 zeigt eine schematische Darstellung eines Durchlichtmikroskops 60 als zweites Ausführungsbeispiel. Das in Figur 8 gezeigte Durchlichtmikroskop 60 unterscheidet sich von dem in Figur 1 gezeigten Durchlichtmikroskop 10 im Wesentlichen dadurch, dass die Steuereinheit 22 das erste Modulatorelement 66 und das zweite Modulatorelement 70 nicht dynamisch steuert.

Das Durchlichtmikroskops 60 nach Figur 8 umfasst die Einrichtung 62 zur Durchführung des erfindungsgemäßen Durchlichtkontrastierverfahrens. Die Einrichtung 62 umfasst die Beleuchtungseinheit 64 zur Beleuchtung der Probe 16 und die Detektionseinheit 70. Gleiche oder gleichwirkendende Elemente sind in den Figuren 1 und 8 mit dem gleichen Bezugszeichen bezeichnet.

Die Beleuchtungseinheit 64 umfasst das erste Modulatorelement 66, das in einer Pupillenebene der Beleuchtungseinrichtung 18 angeordnet ist und das ausgebildet ist, das von der Lichtquelle 24 ausgehende Beleuchtungslicht 26 entsprechend der ersten Beleuchtungspupille 38 und der zweiten Beleuchtungspupille spektral zu kodieren. Dies kann beispielsweise mit Hilfe mehrerer spektraler Filter geschehen, die jeweils in Form der ersten Beleuchtungspupille 38 bzw. der zweiten Beleuchtungspupille ausgebildet sind.

Die Detektionseinheit 68 umfasst das zweites Modulatorelement 70, das in der Pupillenebene des Objektivs 14 angeordnet ist und das ausgebildet ist, das von der Probe 16 ausgehende Detektionslicht 27 entsprechend der ersten Detektionspupille 40 und der zweiten Detektionspupille spektral zu kodieren, sowie das ortsaufgelöste Detektorelement 72. Das ortsaufgelöste Detektorelement 72 ist ausgebildet, das Detektionslicht 27 in zwei Teilbildern zu trennen. Diese Trennung erfolgt durch eine Bayer-Matrix.

Die Steuereinheit 22 steuert die das Detektorelement 72 derart, dass das erste Teilbild, das der ersten Beleuchtungspupille 38 und der ersten Detektionspupille 40 zugeordnet ist, und das zweite Teilbild, das der zweiten Beleuchtungspupille und der zweiten Detektionspupille zugeordnet ist, zeitgleich erzeugt werden und dass aus dem ersten Teilbild und dem zweiten Teilbild das Bild der Probe 16 erzeugt wird.

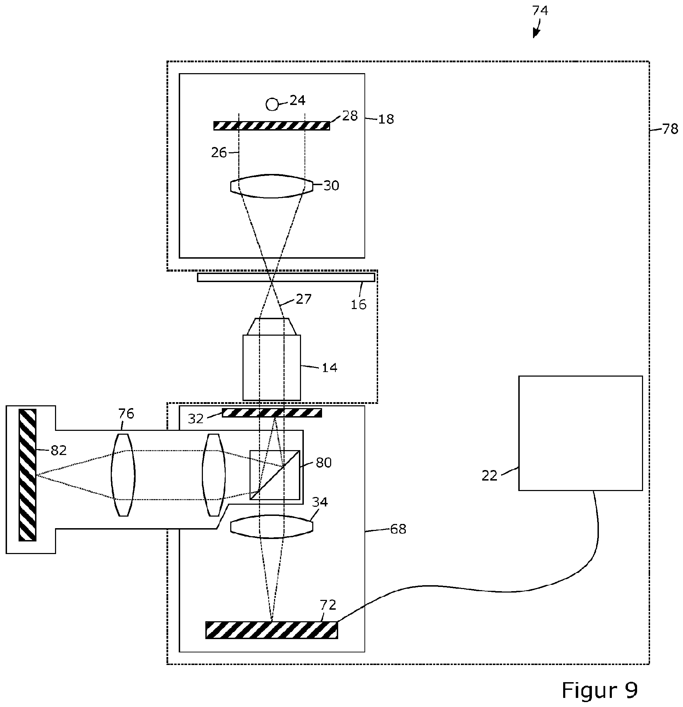

Figur 9 zeigt eine schematische Darstellung eines Durchlichtmikroskops 74 als drittes Ausführungsbeispiel. Das in Figur 9 gezeigte Durchlichtmikroskop 74 unterscheidet sich von dem in Figur 1 gezeigten Durchlichtmikroskop 10 im Wesentlichen dadurch, dass die Einrichtung 78 zur Durchführung des erfindungsgemäßen Durchlichtkontrastierverfahrens zusätzlich ein Bertrandlinsensystem 76 umfasst. Gleiche oder gleichwirkendende Elemente sind in den Figuren 1 und 9 mit dem gleichen Bezugszeichen bezeichnet.

Das Bertrandlinsensystem 76 umfasst einen in einer Fokusebene des Objektivs 14 angeordneten Strahlteiler 80, mit dessen Hilfe ein Teil des Beleuchtungslichts 27 auf ein weiteres ortsaufgelöstes Detektorelement 82 gelenkt wird. Durch das Bertrandlinsensystem 76 ist eine Erfassung des Ausleuchtungsprofils der Detektionspupillen möglich. Dies wiederum erlaubt der Steuereinheit 22 eine adaptive Anpassung des Winkelspektrums der Beleuchtung durch die Beleuchtungseinheit 18 durch Steuerung des Modulatorelements 28.

Gleiche oder gleichwirkendende Merkmale sind in den Figuren 1 und 9 mit dem gleichen Bezugszeichen bezeichnet.

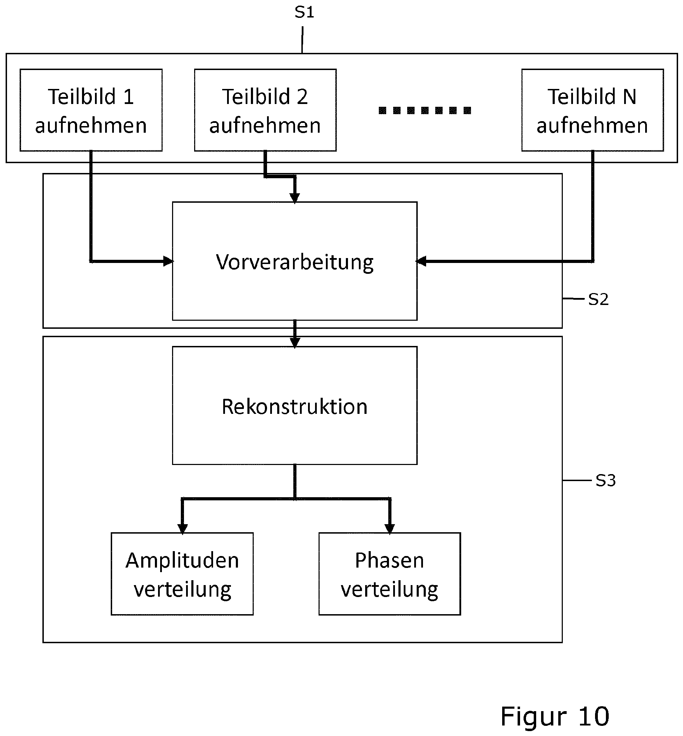

Figur 10 zeigt ein Flussdiagramm, das eine spezielle Ausführungsform des erfindungsgemäßen mikroskopisches Durchlichtkontrastierverfahrens zeigt.

In einem ersten Schritt S1 werden insgesamt N Teilbilder aufgenommen. Die Teilbilder sind jeweils genau einer Beleuchtungspupille und einer Detektionspupille zugeordnet. Die Beleuchtungspupille und die Detektionspupille sind jeweils derart zueinander angeordnet, dass zumindest ein Bereich des Winkelraums in einem Hellfeld und ein von diesem Bereich verschiedener weiterer Bereich des Winkelraums in einem Dunkelfeld liegt. Jedes der N Teilbilder weist somit einen Hellfeldanteil und einen Dunkelfeldanteil auf. Die Aufnahme der N Teilbilder kann sequentiell, d.h. zeitlich aufeinander folgend, oder simultan, d.h. gleichzeitig, erfolgen. Erfolgt die Aufnahme simultan, muss jeweils eine spektrale Kodierung der Beleuchtungspupille erfolgen, wie sie weiter oben im Zusammenhang mit Figur 8 genauer beschrieben ist.

In einem zweiten Schritt S2 werden die N Teilbilder vorverarbeitet, d.h. für jedes Teilbild wird beispielsweise das Sampling angepasst, eine Rauschreduktion durchgeführt und/oder eine spektrale Umverteilung durchgeführt. Dies dient der Verbesserung der Bildqualität des aus den N Teilbildern rekonstruierten Bildes der Probe 16.

In einem dritten Schritt S3 wird aus den N Teilbildern und den zugehörigen Transferfunktionen, d.h. den optischen Übertragungsfunktionen, die komplexe Transmissionsfunktion, d.h. das komplexe Streupotential, der Probe 16 als Bild der Probe 16 rekonstruiert. Dies kann beispielweise über einen Wiener-Filter oder über iterative Methoden, wie sie beispielsweise in M. Chen et al., Biomed. Opt. Exp. 7 (2016), 3940 beschrieben sind, erfolgen. Ein Beispiel für eine solche Rekonstruktion ist in den Figuren 6 und 7 gezeigt. Eine Darstellung der komplexen Transmissionsfunktion der Probe 16 kann insbesondere als separate Amplituden- und als Phasenverteilungen erfolgen.

### Bezugszeichenliste

- 10: Durchlichtmikroskop
- 12: Einrichtung
- 14: Objektiv
- 16: Probe
- 18: Beleuchtungseinheit
- 20: Detektionseinheit
- 22: Steuereinheit
- 24: Lichtquelle
- 26: Beleuchtungslicht
- 27: Detektionslicht
- 28: Modulatorelement
- 30: Kondensor
- 32: Modulatorelement
- 34: Tubuslinse
- 36: Detektorelement
- 38: Beleuchtungspupille
- 40: Detektionspupille
- 42, 44: Bereich
- 46, 48: Transferfunktion
- 50: Nulldurchgang
- 52: Transferfunktion
- 54a, 54b, 54c: Teilbild
- 56: Amplitudenobjekt
- 58: Phasenobjekt
- 60: Durchlichtmikroskop
- 62: Einrichtung
- 64: Beleuchtungseinheit
- 66: Modulatorelement
- 68: Detektionseinheit
- 70: Modulatorelement
- 72: Detektorelement
- 74: Durchlichtmikroskop
- 76: Bertrandlinsensystem
- 78: Einrichtung
- 80: Strahlteiler
- 82: Detektorelement

## Patentansprüche

1. Mikroskopisches Durchlichtkontrastierverfahren, bei dem
eine Probe (16) zumindest teilweise durch eine asymmetrische erste Beleuchtungspupille (38) beleuchtet wird,
die Probe (16) zumindest teilweise durch eine asymmetrische erste Detektionspupille (40) abgebildet wird, um ein erstes Teilbild (54a) zu erzeugen,
wobei die erste Beleuchtungspupille (38) und die erste Detektionspupille (40) in Projektion auf eine senkrecht zu einer optischen Achse liegende Ebene derart gegeneinander verdreht und einander teilweise überlappend zueinander angeordnet sind, dass zumindest ein erster Bereich des Winkelraums in einem Hellfeld und ein von dem ersten Bereich verschiedener zweiter Bereich des Winkelraums in einem Dunkelfeld liegt und das erste Teilbild (54a) einen ersten Hellfeldanteil und einen ersten Dunkelfeldanteil aufweist,
die Probe (16) zumindest teilweise durch eine asymmetrische zweite Beleuchtungspupille beleuchtet wird,
die Probe (16) zumindest teilweise durch eine asymmetrische zweite Detektionspupille abgebildet wird, um ein zweites Teilbild (54b) zu erzeugen,
wobei die zweite Beleuchtungspupille und die zweite Detektionspupille in Projektion auf die senkrecht zu der optischen Achse liegende Ebene derart gegeneinander verdreht und einander teilweise überlappend zueinander angeordnet sind, dass zumindest ein dritter Bereich des Winkelraums in einem Hellfeld und ein von dem dritten Bereich verschiedener vierter Bereich des Winkelraums in einem Dunkelfeld liegt und das zweite Teilbild einen zweiten Hellfeldanteil und einen zweiten Dunkelfeldanteil aufweist, und
aus dem ersten Teilbild (54a) und dem zweiten Teilbild (54b) ein Bild der Probe erzeugt wird, indem eine komplexe Transmissionsfunktion der Probe (16) aus dem ersten Teilbild (54a) und dem zweiten Teilbild (54b) rekonstruiert wird.

2. Verfahren nach Anspruch 1, **dadurch gekennzeichnet, dass** die Probe (16) zumindest teilweise mit erstem Beleuchtungslicht durch die erste Beleuchtungspupille (38) beleuchtet wird, die Probe (16) zumindest teilweise mit zweitem Beleuchtungslicht durch die zweite Beleuchtungspupille beleuchtet wird und das erste Beleuchtungslicht und das zweite Beleuchtungslicht eine unterschiedliche spektrale Zusammensetzung aufweisen.

3. Verfahren nach Anspruch 2, **dadurch gekennzeichnet, dass** das erste Teilbild (54a) und das zweite Teilbild (54b) gleichzeitig erzeugt werden.

4. Verfahren nach einem der Ansprüche 1 bis 3, **dadurch gekennzeichnet, dass** für das erste Teilbild (54a) und/oder das zweite Teilbild (54b) eine Anpassung des Samplings, eine Rauschreduktion oder eine spektrale Umverteilung durchgeführt wird.

5. Verfahren nach einem der Ansprüche 1 bis 4, **dadurch gekennzeichnet, dass** das Bild der Probe (16) erzeugt wird, indem die komplexe Transmissionsfunktion der Probe (16) numerisch aus dem ersten Teilbild (54a) und dem zweiten Teilbild (54b) rekonstruiert wird.

6. Verfahren nach einem der Ansprüche 1 bis 5, **dadurch gekennzeichnet, dass** die Schritte zur Erzeugung des Bildes für verschiedene Schichten der Probe (16) wiederholt werden und aus den derart erzeugten Bildern ein Bildstapel erzeugt wird.

7. Verfahren nach einem der Ansprüche 1 bis 6, **dadurch gekennzeichnet, dass** ein Ausleuchtungsprofil der ersten Beleuchtungspupille (38) und/oder ein Ausleuchtungsprofil der zweiten Beleuchtungspupille erfasst wird.

8. Verfahren nach einem der Ansprüche 1 bis 7, **dadurch gekennzeichnet, dass** ein Bild der ersten Beleuchtungspupille (38) und/oder der zweiten Beleuchtungspupille nach Transmission durch die Probe (16) erzeugt wird und mithilfe dieses Bildes Phasen- und Amplitudentransferfunktionen (46, 48) berechnet werden.

9. Verfahren nach einem der Ansprüche 1 bis 8, **dadurch gekennzeichnet, dass** die erste Beleuchtungspupille (38), die zweite Beleuchtungspupille, die erste Detektionspupille (40) und/oder die zweite Detektionspupille abgeschattet werden.

10. Verfahren nach Anspruch 9, **dadurch gekennzeichnet, dass** die Schritte zur Erzeugung des Bildes für verschiedene Abschattungen der ersten Beleuchtungspupille (38), der zweiten Beleuchtungspupille, der ersten Detektionspupille (40) und/oder der zweiten Detektionspupille wiederholt werden.

11. Verfahren nach einem der Ansprüche 1 bis 10, **dadurch gekennzeichnet, dass** die erste Beleuchtungspupille (38), die zweite Beleuchtungspupille, die erste Detektionspupille (40) und/oder die zweite Detektionspupille jeweils die Form eines Kreissektors oder eines Kreissegmentes haben.

12. Verfahren nach einem der Ansprüche 1 bis 11, **dadurch gekennzeichnet, dass** die erste Beleuchtungspupille (38) und die zweite Beleuchtungspupille derart zueinander angeordnet sind, dass sie durch eine Drehung in Überlapp gebracht werden können, und/oder die erste Detektionspupille (38) und die zweite Detektionspupille derart zueinander angeordnet sind, dass sie durch eine Drehung in Überlapp gebracht werden können.

13. Einrichtung zur Durchführung eines mikroskopischen Durchlichtkontrastierverfahrens, umfassend:
eine Beleuchtungseinheit (18, 64), die ausgebildet, eine Probe (16) zumindest teilweise durch eine asymmetrische erste Beleuchtungspupille (38) zu beleuchten und die Probe (16) zumindest teilweise durch eine asymmetrische zweite Beleuchtungspupille zu beleuchten,
eine Detektionseinheit (20, 68), die ausgebildet, die Probe (16) zumindest teilweise durch eine asymmetrische erste Detektionspupille (40) abzubilden, um ein erstes Teilbild (54a) zu erzeugen und die Probe (16) zumindest teilweise durch eine asymmetrische zweite Detektionspupille abzubilden, um ein zweites Teilbild (54b) zu erzeugen,
wobei die erste Beleuchtungspupille (38) und die erste Detektionspupille (40) in Projektion auf eine senkrecht zu einer optischen Achse liegende Ebene derart gegeneinander verdreht und einander teilweise überlappend zueinander angeordnet sind, dass zumindest ein erster Bereich des Winkelraums in einem Hellfeld und ein von dem ersten Bereich verschiedener zweiter Bereich des Winkelraums in einem Dunkelfeld liegt und das erste Teilbild (54a) einen ersten Hellfeldanteil und einen ersten Dunkelfeldanteil aufweist, und
wobei die zweite Beleuchtungspupille und die zweite Detektionspupille in Projektion auf die senkrecht zu der optischen Achse liegende Ebene derart gegeneinander verdreht und einander teilweise überlappend zueinander angeordnet sind, dass zumindest ein dritter Bereich des Winkelraums in einem Hellfeld und ein von dem dritten Bereich verschiedener vierter Bereich des Winkelraums in einem Dunkelfeld liegt und das zweite Teilbild (54b) einen zweiten Hellfeldanteil und einen zweiten Dunkelfeldanteil aufweist, und
eine Steuereinheit (22), die ausgebildet ist, aus dem ersten Teilbild (54a) und dem zweiten Teilbild (54b) ein Bild der Probe (16) zu erzeugen, indem die Steuereinheit (22) eine komplexe Transmissionsfunktion der Probe (16) aus dem ersten Teilbild (54a) und dem zweiten Teilbild (54b) rekonstruiert.

14. Einrichtung nach Anspruch 13, **dadurch gekennzeichnet, dass** die Beleuchtungseinheit (18, 64) ein erstes Modulatorelement (28, 66) zum Erzeugen der ersten Beleuchtungspupille (38) und der zweiten Beleuchtungspupille umfasst, und die Detektionseinheit (20, 68) ein zweites Modulatorelement (32, 70) zum Erzeugen der ersten Detektionspupille und der zweiten Detektionspupille umfasst.

15. Einrichtung nach Anspruch 13 oder 14, **gekennzeichnet durch** ein Bertrandlinsensystem (76) zur Detektion eines Ausleuchtungsprofils der ersten Detektionspupille (38) und/oder eines Ausleuchtungsprofils der zweiten Detektionspupille.

## Claims

1. Microscopic transmitted light contrasting method, in which
a sample (16) is at least partially illuminated by an asymmetric first illumination pupil (38),
the sample (16) is at least partially imaged by an asymmetric first detection pupil (40), to generate a first partial image (54a),
wherein the first illumination pupil (38) and the first detection pupil (40) are rotated relative to each other in projection onto a plane, perpendicular to an optical axis, and are arranged to partially overlap each other, in such a way
that at least a first region of the angular space lies in a bright field and a second region of the angular space, different from the first region, lies in a dark field and the first partial image (54a) has a first bright field portion and a first dark field portion,
the sample (16) is at least partially illuminated by an asymmetric second illumination pupil,
the sample (16) is at least partially imaged by an asymmetric second detection pupil to produce a second partial image (54b),
wherein the second illumination pupil and the second detection pupil are rotated relative to each other in projection onto the plane perpendicular to the optical axis and are arranged to partially overlap each other, such that at least a third region of the angular space lies in a bright field and a fourth region of the angular space, different from the third region, lies in a dark field and the second partial image has a second bright field portion and a second dark field portion, and
an image of the sample is generated from the first partial image (54a) and the second partial image (54b) by reconstructing a complex transmission function of the sample (16) from the first partial image (54a) and the second partial image (54b).

2. The method according to claim 1, **characterised in that** the sample (16) is at least partially illuminated with first illumination light through the first illumination pupil (38), the sample (16) is at least partially illuminated with second illumination light through the second illumination pupil, and the first illumination light and the second illumination light have a different spectral composition.

3. The method according to claim 2, **characterised in that** the first partial image (54a) and the second partial image (54b) are generated simultaneously.

4. The method according to any one of claims 1 to 3, **characterised in that** an adaptation of the sampling, a noise reduction or a spectral redistribution is carried out for the first partial image (54a) and/or the second partial image (54b).

5. The method according to any one of claims 1 to 4, **characterised in that** the image of the sample (16) is generated by numerically reconstructing the complex transmission function of the sample (16) from the first partial image (54a) and the second partial image (54b).

6. The method according to any one of claims 1 to 5, **characterised in that** the steps for generating the image are repeated for different layers of the sample (16) and an image stack is generated from the images thus generated.

7. The method according to any one of claims 1 to 6, **characterised in that** an illumination profile of the first illumination pupil (38) and/or an illumination profile of the second illumination pupil is detected.

8. The method according to any one of claims 1 to 7, **characterised in that** an image of the first illumination pupil (38) and/or the second illumination pupil is generated after transmission through the sample (16) and phase and amplitude transfer functions (46, 48) are calculated using this image.

9. The method according to any one of claims 1 to 8, **characterised in that** the first illumination pupil (38), the second illumination pupil, the first detection pupil (40) and/or the second detection pupil are shaded.

10. The method according to claim 9, **characterised in that** the steps for generating the image are repeated for different shadings of the first illumination pupil (38), the second illumination pupil, the first detection pupil (40) and/or the second detection pupil.

11. The method according to any one of claims 1 to 10, **characterised in that** the first illumination pupil (38), the second illumination pupil, the first detection pupil (40) and/or the second detection pupil each have the shape of a circular sector or a circular segment.

12. The method according to any one of claims 1 to 11, **characterised in that** the first illumination pupil (38) and the second illumination pupil are arranged relative to each other in such a way that they can be brought into overlap by rotation, and/or the first detection pupil (38) and the second detection pupil are arranged relative to each other in such a way that they can be brought into overlap by rotation.

13. Apparatus for carrying out a microscopic transmitted light contrasting method, comprising:
an illumination unit (18, 64) configured to illuminate a sample (16) at least partially through an asymmetric first illumination pupil (38) and to illuminate the sample (16) at least partially through an asymmetric second illumination pupil,
a detection unit (20, 68), configured to image the sample (16) at least partially through an asymmetric first detection pupil (40) to generate a first partial image (54a) and to image the sample (16) at least partially through an asymmetric second detection pupil to generate a second partial image (54b),
wherein the first illumination pupil (38) and the first detection pupil (40) are rotated relative to each other in projection onto a plane, perpendicular to an optical axis, and are arranged to partially overlap each other, in such a way that at least a first region of the angular space lies in a bright field and a second region of the angular space, different from the first region, lies in a dark field and the first partial image (54a) has a first bright field portion and a first dark field portion, and
wherein the second illumination pupil and the second detection pupil are rotated relative to each other in projection onto the plane perpendicular to the optical axis and are arranged to partially overlap each other, such that at least a third region of the angular space lies in a bright field and a fourth region of the angular space, different from the third region, lies in a dark field and the second partial image (54b) has a second bright field portion and a second dark field portion, and
a control unit (22) which is configured to generate an image of the sample (16) from the first partial image (54a) and the second partial image (54b) whereby the control unit (22) reconstructs a complex transmission function of the sample (16) from the first partial image (54a) and the second partial image (54b).

14. The apparatus according to claim 13, **characterised in that** the illumination unit (18, 64) comprises a first modulator element (28, 66) for generating the first illumination pupil (38) and the second illumination pupil, and the detection unit (20, 68) comprises a second modulator element (32, 70) for generating the first detection pupil and the second detection pupil.

15. The apparatus according to claim 13 or 14, **characterised by** a Bertrand lens system (76) for detecting an illumination profile of the first detection pupil (38) and/or an illumination profile of the second detection pupil.

## Revendications

1. Procédé de contraste en microscopie par lumière transmise selon lequel
un échantillon (16) est éclairé au moins partiellement par une première pupille d'éclairage (38) asymétrique,
l'échantillon (16) est représenté au moins partiellement par une première pupille de détection (40) asymétrique pour générer une première image partielle (54a),
dans lequel la première pupille d'éclairage (38) et la première pupille de détection (40) sont disposées en projection sur un plan perpendiculaire à un axe optique de manière tournée l'une par rapport à l'autre et en chevauchement partiel l'une par rapport à l'autre de telle sorte qu'au moins une première zone de l'espace angulaire se trouve dans un champ clair et une deuxième zone de l'espace angulaire différente de la première zone dans un champ sombre et la première image partielle (54a) présente une première partie de champ clair et une première partie de champ sombre,
l'échantillon (16) est éclairé au moins partiellement par une deuxième pupille d'éclairage asymétrique,
l'échantillon (16) est représenté au moins partiellement par une deuxième pupille de détection asymétrique pour générer une deuxième image partielle (54b),
dans lequel la deuxième pupille d'éclairage et la deuxième pupille de détection sont disposées en projection sur le plan perpendiculaire à l'axe optique de manière tournée l'une par rapport à l'autre et en chevauchement partiel l'une par rapport à l'autre de telle sorte qu'au moins une troisième zone de l'espace angulaire se trouve dans un champ clair et une quatrième zone de l'espace angulaire différente de la troisième zone dans un champ sombre et la deuxième image partielle présente une deuxième partie de champ clair et une deuxième partie de champ sombre, et
une image de l'échantillon est générée à partir de la première image partielle (54a) et de la deuxième image partielle (54b) en reconstruisant une fonction de transmission complexe de l'échantillon (16) à partir de la première image partielle (54a) et de la deuxième image partielle (54b).

2. Procédé selon la revendication 1, **caractérisé en ce que** l'échantillon (16) est éclairé au moins partiellement avec une première lumière d'éclairage par la première pupille d'éclairage (38), l'échantillon (16) est éclairé au moins partiellement avec une deuxième lumière d'éclairage par la deuxième pupille d'éclairage et la première lumière d'éclairage et la deuxième lumière d'éclairage présentent une composition spectrale différente.

3. Procédé selon la revendication 2, **caractérisé en ce que** la première image partielle (54a) et la deuxième image partielle (54b) sont générées simultanément.

4. Procédé selon l'une quelconque des revendications 1 à 3, **caractérisé en ce que** pour la première image partielle (54a) et/ou la deuxième image partielle (54b) une adaptation de l'échantillonnage, une réduction du bruit ou une redistribution spectrale est réalisée.

5. Procédé selon l'une quelconque des revendications 1 à 4, **caractérisé en ce que** l'image de l'échantillon (16) est générée en reconstruisant numériquement la fonction de transmission complexe de l'échantillon (16) à partir de la première image partielle (54a) et de la deuxième image partielle (54b).

6. Procédé selon l'une quelconque des revendications 1 à 5, **caractérisé en ce que** les étapes de génération de l'image sont répétées pour différentes couches de l'échantillon (16) et qu'une pile d'images est générée à partir des images ainsi générées.

7. Procédé selon l'une quelconque des revendications 1 à 6, **caractérisé en ce qu'**un profil d'éclairage de la première pupille d'éclairage (38) et/ou un profil d'éclairage de la deuxième pupille d'éclairage est acquis.

8. Procédé selon l'une quelconque des revendications 1 à 7, **caractérisé en ce qu'**une image de la première pupille d'éclairage (38) et/ou de la deuxième pupille d'éclairage est générée après transmission par l'échantillon (16) et des fonctions de transfert de phase et d'amplitude (46, 48) sont calculées à l'aide de cette image.

9. Procédé selon l'une quelconque des revendications 1 à 8, **caractérisé en ce que** la première pupille d'éclairage (38), la deuxième pupille d'éclairage, la première pupille de détection (40) et/ou la deuxième pupille de détection sont ombragées.

10. Procédé selon la revendication 9, **caractérisé en ce que** les étapes de génération de l'image sont répétées pour différents ombrages de la première pupille d'éclairage (38), de la deuxième pupille d'éclairage, de la première pupille de détection (40) et/ou de la deuxième pupille de détection.

11. Procédé selon l'une quelconque des revendications 1 à 10, **caractérisé en ce que** la première pupille d'éclairage (38), la deuxième pupille d'éclairage, la première pupille de détection (40) et/ou la deuxième pupille de détection ont chacune la forme d'un secteur circulaire ou d'un segment circulaire.

12. Procédé selon l'une quelconque des revendications 1 à 11, **caractérisé en ce que** la première pupille d'éclairage (38) et la deuxième pupille d'éclairage sont disposées l'une par rapport à l'autre de manière à pouvoir être mises en chevauchement par une rotation, et/ou la première pupille de détection (38) et la deuxième pupille de détection sont disposées l'une par rapport à l'autre de manière à pouvoir être mises en chevauchement par une rotation.

13. Dispositif pour réaliser un procédé de contraste en microscopie par lumière transmise, comprenant :
une unité (18, 64) d'éclairage qui est réalisée pour éclairer au moins partiellement un échantillon (16) à l'aide d'une première pupille d'éclairage (38) asymétrique et pour éclairer au moins partiellement l'échantillon (16) à l'aide d'une deuxième pupille d'éclairage asymétrique,
une unité (20, 68) de détection qui est réalisée pour représenter l'échantillon (16) au moins partiellement à l'aide d'une première pupille de détection (40) asymétrique pour générer une première image partielle (54a) et pour représenter l'échantillon (16) au moins partiellement à l'aide d'une deuxième pupille de détection asymétrique pour générer une deuxième image partielle (54b),
dans lequel la première pupille d'éclairage (38) et la première pupille de détection (40) sont disposées en projection sur un plan perpendiculaire à un axe optique de manière tournée l'une par rapport à l'autre et en chevauchement partiel l'une par rapport à l'autre de telle sorte qu'au moins une première zone de l'espace angulaire se trouve dans un champ clair et une deuxième zone de l'espace angulaire différente de la première zone dans un champ sombre et la première image partielle (54a) présente une première partie de champ clair et une première partie de champ sombre, et
dans lequel la deuxième pupille d'éclairage et la deuxième pupille de détection sont disposées en projection sur le plan perpendiculaire à l'axe optique de manière tournée l'une par rapport à l'autre et en chevauchement partiel l'une par rapport à l'autre de telle sorte qu'au moins une troisième zone de l'espace angulaire se trouve dans un champ clair et une quatrième zone de l'espace angulaire différente de la troisième zone dans un champ sombre et la deuxième image partielle (54b) présente une deuxième partie de champ clair et une deuxième partie de champ sombre, et
une unité de commande (22) qui est réalisée pour générer une image de l'échantillon (16) à partir de la première image partielle (54a) et de la deuxième image partielle (54b), du fait que l'unité de commande (22) reconstruit une fonction de transmission complexe de l'échantillon (16) à partir de la première image partielle (54a) et de la deuxième image partielle (54b).

14. Dispositif selon la revendication 13, **caractérisé en ce que** l'unité (18, 64) d'éclairage comprend un premier élément modulateur (28, 66) pour générer la première pupille d'éclairage (38) et la deuxième pupille d'éclairage, et l'unité (20, 68) de détection comprend un deuxième élément modulateur (32, 70) pour générer la première pupille de détection et la deuxième pupille de détection.

15. Dispositif selon la revendication 13 ou la revendication 14, **caractérisé par** un système de lentille de Bertrand (76) pour la détection d'un profil d'éclairage de la première pupille de détection (38) et/ou d'un profil d'éclairage de la deuxième pupille de détection.
